Europäisches Patentamt

European Patent Office

Office européen des brevets

(11) Veröffentlichungsnummer: **0 242 443**
**A1**

## (12) EUROPÄISCHE PATENTANMELDUNG

(21) Anmeldenummer: **86116839.1**

(22) Anmeldetag: **03.12.86**

(51) Int. Cl.⁴: **B62D 51/06** , B62D 51/00

(30) Priorität: **24.03.86 CH 1182/86**

(43) Veröffentlichungstag der Anmeldung:
**28.10.87 Patentblatt 87/44**

(84) Benannte Vertragsstaaten:
**AT BE CH DE FR GB IT LI NL**

(71) Anmelder: **Rapid Maschinen und Fahrzeuge AG**
**Heimstrasse 7**
**CH-8953 Dietikon(CH)**

(72) Erfinder: **Meier, Daniel**
**Grendelstrasse 18**
**CH-5400 Ennetbaden(CH)**

(74) Vertreter: **Troesch, Jacques J. et al**
**Walchestrasse 19**
**CH-8035 Zürich(CH)**

(54) **Einachs-Geräteträger für Kommunal- und/oder Landwirtschaftseinsatz.**

(57) Bei einem Einachs-Geräteträger für Kommunal- und/oder Landwirtschaftseinsatz ist einer der Handgriffe (7) drehbar und/oder verschiebbar angeordnet, um durch dessen Bewegen sowohl die Maschinenfortbewegungsgeschwindigkeit als auch die Bewegungsrichtung vorwärts/rückwärts festzulegen. Der Geräteträger weist ein Variatorgetriebe (13) auf, dessen Steuerung über zwei Kabel (10, 11) oder Gestänge von einem der Handgriffe aus erfolgt. Ferner ist ein Element, z.B. eine Feder (17), angeordnet, um die Maschine (1) beim Loslassen des Dreh-oder Schalthandgriffes (7) bei Retourfahrt zum Stillstand zu bringen. Die Steuerung kann mechanisch, elektrisch oder hydraulisch von einem der Handdrehgriffe, bzw. einem Schaltorgan, beispielsweise einem Steuerventil, in unmittelbarer Nähe des Handgriffes aus erfolgen. Damit wird eine einfache, leicht zu betätigende und sichere Schnellstoppeinrichtung für derartige Maschinen einerseits sowie die Möglichkeit, ohne kraftverzehrende Handhabung eine derartige Maschine sowohl im Vorwärts-als auch im Rückwärtslauf an beiden Handgriffen sicher zu führen, anderseits geschaffen.

FIG. 1

## Einachs-Geräteträger für Kommunal-und/oder Landwirtschaftseinsatz

Die vorliegende Erfindung betrifft einen Einachs-Geräteträger für Kommunal-und/oder Landwirtschaftseinsatz.

Die heute gebräuchlichen derartigen handgeführten Maschinen sind mit einem Hebel zur Regelung der Drehzahl des Antriebsmotors ausgerüstet sowie mit einem von diesem Hebel getrennten, normalerweise ebenfalls in Griffnähe befindlichen Kupplungshebel und in Reichweite, aber vom Handgriff merklich abgesetzt, einem Schalthebel, um das Gefährt in Ruhestellung, für eine Vorwärtsbewegung oder eine Rückwärtsbewegung zu schalten. Mit dieser herkömmlichen Konstruktion muss der Maschinenführer zum Betätigen des Schalthebels den Lenkholm mit einer Hand loslassen, so dass für diese Schaltzeit das Gefährt nur einhändig geführt werden kann, was gewisse Gefahren mit sich bringt.

Es ist anderseits bekannt, derartige Maschinen durch Zwischenschaltung eines sog. Variatorgetriebes steuerungsmässig einfacher zu gestalten, indem das Ein-und Auskuppeln wegfällt und der ausserhalb der Handgriffe liegende Handhebel zur Steuerung des Variatorgetriebes dient, um je nach Lage dieses Hebels die Maschine stufenlos vorwärts oder rückwärts mit gewünschter Geschwindigkeit zu bewegen bzw. die Maschine stillzusetzen. Aber auch hier ist der Maschinenführer gezwungen, zum Schalten dieses Hebels den einen Handgriff loszulassen und die Maschine einhändig zu führen.

Es ist für den Bediener äusserst unangenehm, ausgerechnet in einem kritischen Moment den Motor-Handmäher nur noch mit einer Hand zu führen, um mit der anderen den Verstellhebel zwecks Ausschaltung des Hydrostatantriebes zu betätigen.

Es ist zwar bekannt, dass Einachsmäher oftmals ohne Rückwärtsgang ausgeführt werden, um der Gefahr auszuweichen, beim Rückwärtsfahren infolge Stolperns die Führung über das Fahrzeug zu verlieren und von diesem überfahren zu werden.

Es gehört ferner zum Stande der Technik, diesem Uebelstand dadurch abzuhelfen, dass man den Hebel für das Schalten des Rückwärtsganges des Getriebes einer Federkraft aussetzt und den Hebel entgegen der Federkraft mittels eines Bowdenzuges durch eine Handgriffbewegung am Führungsholm im Rückwärtsgang behält, derart, dass bei Loslassen des Griffes der Schalthebel automatisch aus dem Rückwärtsgang gelangt und damit diese Gefahr des Ueberfahrens gebannt ist.

Da die Schalthebelbewegung eines derartigen Antriebdispositivs im Rückwärtsfahren durch stetes Halten des gefederten Hebels kraftaufwendig ist, haben solche Maschinen nicht alle erwarteten Hoffnungen zu erfüllen vermocht. (FR-A-992 839)

Es ist ferner eine Motoreinachsmaschine mit hydrostatischem Antrieb für Landwirtschafts-und Kommunalbetriebe bekannt geworden, bei welchem zwischen dem Antriebsmotor und dem Differentialgetriebe die hydrostatische Einheit als geschlossene Einheit eingebaut ist. Diese besteht aus Pumpe und Oelmotor, wobei mittels eines Schaltgestänges eine stufenlose Vorlauf-und Rücklaufbewegung der Maschine erreicht werden kann. (CH-A-607 699)

Aufgrund dieses Standes der Technik bezweckt die vorliegende Erfindung die Schaffung einer einfachen, leicht zu betätigenden und sicheren Schnellstoppeinrichtung für derartige Maschinen einerseits sowie die Möglichkeit, ohne kraftverzehrende Handhabung eine derartige Maschine sowohl im Vorwärts-als auch im Rückwärtslauf an beiden Handgriffen sicher zu führen.

Eine derartige Maschine zeichnet sich erfinsungsgemäss durch den Wortlaut des Anspruchs 1 aus.

Ausführungsbeispiele des Erfindungsgegenstandes werden anschliessend anhand einer - schematischen Figur erläutert.

Es zeigen:

Fig. 1 eine Mehrzweckmaschine ohne zweckgebundene Darstellung der Aggregate, in Aufsicht,

Fig. 2 eine Aufsicht auf den hinteren Teil eines Motor-Handmähers,

Fig. 3 die Anordnung gemäss Fig. 2, in Seitenansicht,

Fig. 4 eine Variante zur Umsteuerung, in der Ansicht von unten.

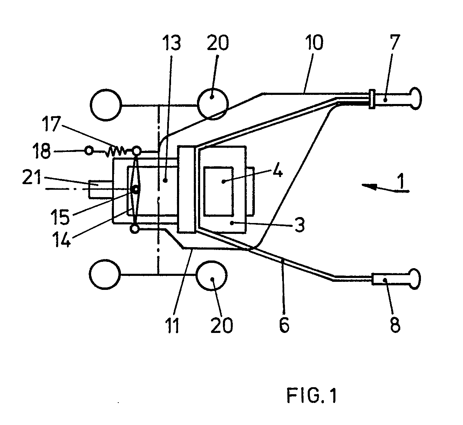

In Fig. 1 ist eine Mehrzweckmaschine 1 ersichtlich, welche mittels eines Verbrennungsmotors 3, der ein Variatorgetriebe antreibt, angetrieben wird. Ueber dem Verbrennungsmotor ist ein Brennstofftank 4 ersichtlich. Ein Holm oder Lenker mit zwei Handgriffen 7 und 8 dient der Führung der Mehrzweckmaschine 1. Vom rechten Handgriff 7 aus, der drehbar ist, führen zwei Kabelzüge 10 und 11 zu einem Variatorgetriebe 13. Die Kabelzüge 10 und 11 greifen an den beiden Enden eines Steuerjochs 14 an, welches um eine Achse 15 - schwenkbar ist und den Variator in der Geschwindigkeit für Vorwärts-und Retourfahrt steuert. Eine Rückführfeder 17 ist dazu vorgesehen, das Steuerjoch 14 bei Rückwärtsfahrt jeweils, wie noch erläutert wird, in seine Nullage, in welcher das Variatorgetriebe 13 stillgesetzt ist, zurückzuführen. Diese Feder 17 ist einerends am Steuerjoch 14 und andernends an einem Festpunkt 18 des Maschinengehäuses befestigt.

Beidseits des Gehäuses sind die beiden Räder 20 der Maschine ersichtlich sowie eine mittig nach vorne ragende Zapfwelle 21, welche dazu dient, jeweils das verwendungsspezifische Gerät anzutreiben, seien dies Mähmesser, eine Bodenhakeinrichtung, Schneeräumungsvorrichtungen o. dgl.

Beim Verwenden der Mehrzweckmaschine 1 wird der Verbrennungsmotor 3 angeworfen. Dabei ist die Abtriebswelle, durch die Lage des Steuerjochs in neutraler Position, im Stillstand. Soll die Maschine vorwärts bewegt werden, so wird sie an den beiden Handgriffen 7 und 8 erfasst. Der Handgriff 7 ist drehbar, so dass entsprechend der gewünschten Vorwärts-bzw. Rückwärtsbewegung der Maschine der Handgriff 7 nach rechts oder nach links gedreht wird. Durch die Drehung nach links wird beispielsweise der Kabelzug 11 gegen den Handgriff 7 hin gezogen und das Steuerjoch 14 im Gegenuhrzeigersinn aus der neutralen Lage verschwenkt, so dass das Variatorgetriebe 13 die Maschine in Vorwärtsrichtung antreibt. Dabei ist die Feder 17 völlig entspannt. Entsprechend dem Mass der Verdrehung des Handgriffes 7 wird das Steuerjoch 14 verschwenkt. Daher ist die Drehzahl des Variatorgetriebes 13 stufenlos regelbar. Durch Drehen des Griffes 7 in der Gegenrichtung, d.h. nach rechts, wird vorerst die Nullstellung des Steuerjoches 14 erreicht, wobei der Kabelzug 10 gegen den Handgriff 7 hin gezogen wird. Das Steuerjoch 14 gelangt in seine dargestellte Mittellage und die Maschine steht still. Durch Weiterdrehen des Handgriffes 7 nach rechts wird der Kabelzug 10 in Richtung des Handgriffes 7 bewegt, so dass das Steuerjoch 14 unter Spannen der Feder 17 im Uhrzeigersinn ausgeschwenkt wird. Damit erfolgt die Steuerung des Variatorgetriebes 13 in der anderen Drehrichung, so dass sich die Maschine nach rückwärts bewegt.

Die Steuerung kann, wie erläutert, mechanisch sein. Es ist aber auch möglich, diese elektrisch oder hydraulisch vorzusehen. Dabei erfolgt die Betätigung auch hier in dem Sinne, dass das Fahrzeug stets an beiden Handgriffen geführt werden kann, ohne durch die Steuerung daran gehindert zu werden. Gerät das Fahrzeug ausser Kontrolle, z.B. durch einen Sturz des Fahrers, so gelangt das Fahrzeug automatisch in den antriebslosen Zustand. (Nullage des Steuerjochs 14) Das Steuern kann über einen Handdrehgriff oder ein anderes Schaltorgan in unmittelbarer Nähe eines Handgriffes erfolgen, z.B. durch Betätigen eines Steuerventils.

Die Steuerelemente können aufeinander so abgestimmt werden, dass der jeweilige maximale Drehausschlag des Handgriffes 7 die gewünschte maximale Vorwärts-bzw. Rückwärtsgeschwindigkeit festlegt. Bei Verwendung eines Hydrogetriebes macht man sich ferner den Umstand zunutze, dass wegen des erzeugten Momentes über die Räder 20 eine geringe Rückstellkraft versucht, das Steuerjoch 14 in seine mittige Nullage zu drehen. Diese Kraft muss dauernd über den zweizügigen Handgriff 7 kompensiert werden. Sie ist mit Hilfe der Abmessungen des Steuerjoches 14 und der Feder 17 sowie allfälliger Uebersetzungen im zweizügigen Handgriff 7 einstellbar.

Aus Sicherheitsgründen wurde für die Rückwärtsbewegung der Maschine zusätzlich ein Anschlag mit Hilfe der Rückführfeder 17 realisiert. Um mithin die erläuterte Maschine über das Variatorgetriebe 13 rückwärts zu bewegen, muss zusätzlich zum Widerstand des Variatorgetriebes 13 in vorbesprochener Weise und der Rückstellkraft durch das Moment der Räder 20 eine wählbare Kraft der Rückführfeder 17 überwunden werden. Die Kraft der Feder 17 wird so gross gewählt, dass beim Loslassen des zweizügigen Handgriffes 7 beim Rückwärtsfahren das Variatorgetriebe 13 mit dem Steuerjoch 14 und den beiden Kabelzügen 10 und 11 in die neutrale Mittellage zurückgebracht wird. Damit wird erreicht, dass die Maschine selbsttätig zum Stillstand kommt und damit eine zusätzliche Sicherheitsfunktion erfüllt, welche beim Rückwärtsfahren den fahrer vor Gefahr, beispielsweise beim Stolpern, - schützt.

Diese Maschine kann daher mühelos und unter stetiger Führung mit beiden Händen sicher und gefahrlos geschaltet und geführt werden.

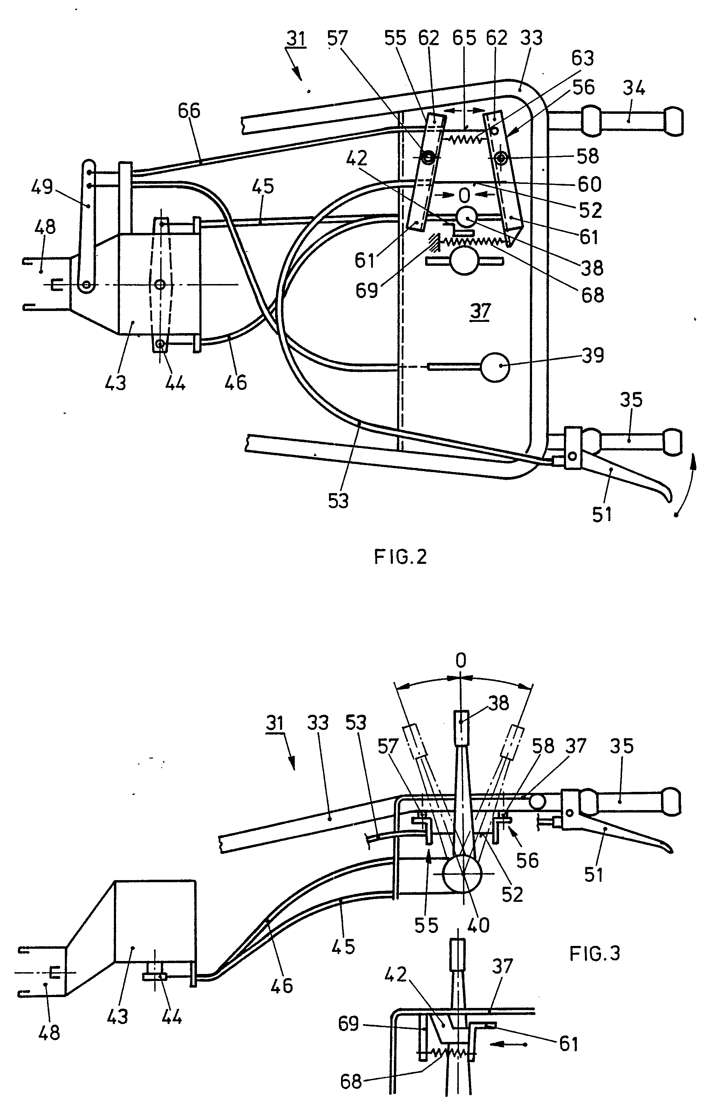

Eine Variante zeigen die anschliessend erläuterten Fig. 2 und 3.

Die Fig. 2 und 3 zeigen den Hinterteil 31 eines Motor-Handmähers. Dieser ist mittels eines Lenkrahmens 33 mit zwei Handgriffen 34 und 35 führbar. An der hinteren Strebe des Lenkrahmens 33 befindet sich ein Armaturenblech 37 mit einem Schalthebel 38 zum Vorwärts/Rückwärtsschalten des Hydrostatantriebes und mit einem Schalthebel 39 zum Zu-und Abschalten des Zapfwellenantriebes. Der Schalthebel 38 ist in einem Schwenklager 40 schwenkbar gelagert. Ferner befindet sich am rechten Handgriff ein Gashebel für den Antriebs-Verbrennungsmotor (nicht dargestellt). Ein von diesem Motor angetriebener Hydrostatantrieb 43 ist mit einem Steuerhebel 44 versehen, welcher mittels zweier Zugkabel 45 und 46 in die Extremlagen vorwärts und rückwärts sowie in die in Fig. 2 ersichtliche Mittellage, die Nullage, steuerbar ist. Ein am Armaturenblech 37 befestigter, zur genauen Einstellung der Nullage bestimmter Anschlag 42

ist bezüglich des Schalthebels 38 einstellbar. Der Antriebsmotor dient ferner direkt dem Antrieb des Mähbalkens über einen Zapfwellenantrieb 48, dessen Steuerhebel 49 ebenfalls ersichtlich ist.

Am linken Handgriff ist ein Handschwenkhebel 51 befestigt, mittels welchem ein Zugkabel 52, das sich in einer Kabelführung 53 befindet, bewegt werden kann. Das Zugkabel ist mit zwei Schwenkhebeln 55 und 56 verbunden, welche Hebel je in einem Lagerzapfen 57 bzw. 58 schwenkbar gelagert sind. Das Zugkabel 52 ist im Punkt 60, z.B. mittels eines Lötnippels, befestigt. Die Kabelführung 53 steht, wie gezeichnet, am Schwenkhebel 55 an. Die beiden Schwenkhebel 55 und 56 sind mit den längeren Armen 61 und den kürzeren Armen 62 als zweiarmige Hebel ausgebildet. Zwischen den beiden kürzeren Armen 62 befindet sich eine Zugfeder 63, welche bestrebt ist, die Schwenkhebel 55 und 56 mit den Armen 61 in ihre ausgeschwenkte Lage zu ziehen, d.h. die Schere zu öffnen, um die Bewegung des Schalthebels 38 nicht zu behindern, wie dies Fig. 2 zeigt.

Eine Rückzugfeder 68, deren eines Ende an einem am Armaturenblech 37 befestigten Federendhalter 69 eingehängt ist, versucht, entgegen der Wirkung der Zugfeder 63, den hintern längern Arm 61 in seine Nullage zu schwenken, unter Belassung des andern Armes 61 in seiner offenen Lage. Dadurch besteht die Möglichkeit, die für die Betätigung des Handschwenkhebels 51 benötigte Kraft zu ändern. Auf diese Weise kann, wenn das Kabel 52 als Druck/Zugkabel ausgebildet ist, erreicht werden, dass der Hebel 51 in seiner Ruhelage am Handgriff 35 liegt und er zum Fahren in der Spreizlage (Fig. 2) gehalten werden muss. In diesem Falle ist die Notschaltung eine Totmannschaltung, wobei die Bedingung, das Gerät mittels beider Hände an den Handgriffen 34 und 35 zu führen, erhalten bleibt. An den Armen 62 ist ein weiteres Zugkabel 65 befestigt, das in einer Kabelführung 66 läuft und dessen anderes Ende am Steuerhebel 49 für den Zapfwellenantrieb 48 endet.

Wenn nun während des Mähvorganges plötzlich vor dem Mähbalken ein Hindernis auftaucht, so kann der Mähende, ohne die Handgriffe 34 und 35 loszulassen, den Handschwenkhebel 51 erfassen und ihn betätigen, worauf die beiden Schwenkhebel 55 und 56, um ihre Lagerzapfen 57 und 58 schwenkend, eine Zangenbewegung ausführen und damit den sich normalerweise in seiner Vorwärtslage befindenden Schalthebel 38 in die Mittellage, d.h. seine Nullage, zurückführen, in welcher der Hydrostatantrieb abgeschaltet ist, worauf der Mäher unverzüglich stillsteht. Auf diese Weise ist es möglich, ohne die Führung des Motor-

handmähers durch Loslassen eines Handgriffes zwecks Betätigung des Schalthebels 38 zu verunsichern, durch Ziehen des Handschwenkhebels 51 die Gefahr einer Kollision zu verhüten.

Das gleiche Manöver wird beim Auftauchen eines Hindernisses beim Rückwärtsfahren durchgeführt.

Durch die Zangenbewegung und Schliessen der Arme 61 sowie das Erfassen des Schalthebels 38 werden die Arme 62 gespreizt, so dass der Arm des Schwenkhebels 56 das Zugkabel 65 betätigt und dadurch den Steuerhebel 49 zum Zapfwellenantrieb 48 im Uhrzeigersinn (Fig. 2) verschwenkt. Damit wird auch der Zapfwellenantrieb 48 stillgesetzt bzw. vom Antriebsmotor abgekuppelt.

Mit dem Abschalten des Fahrantriebes, d.h. des Hydrostatantriebes 43, kann zugleich eine Bremsung dieses Antriebes des Mähwerks erfolgen.

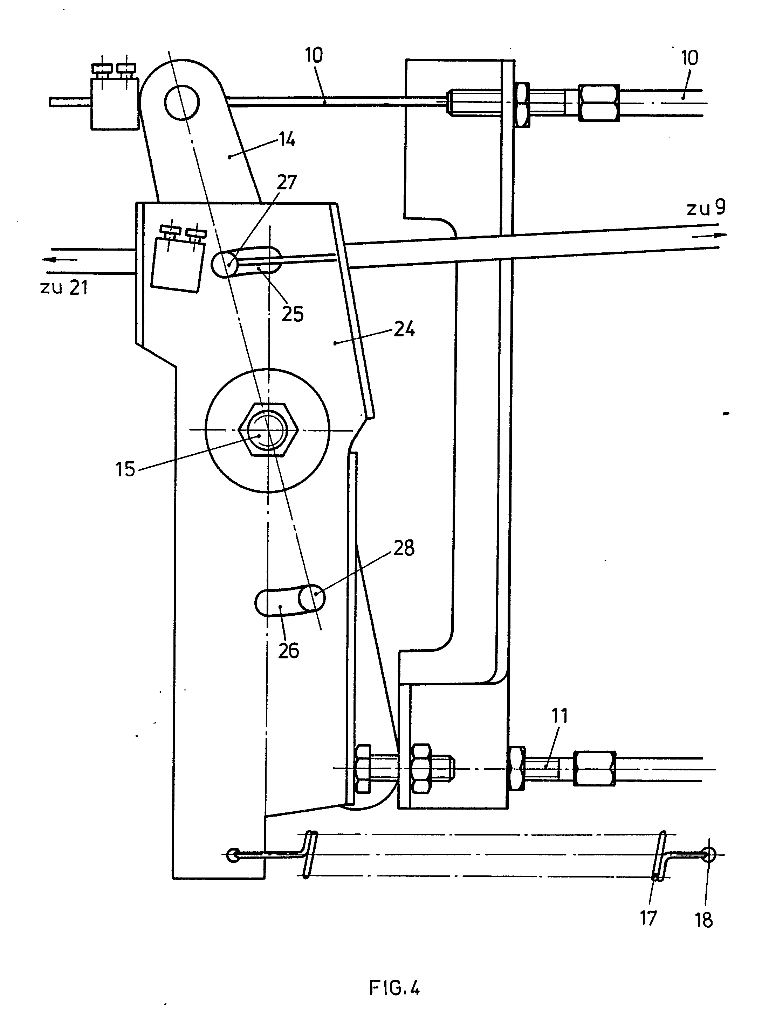

In Fig. 4 ist eine andere Ausführung der Umsteuerung im Bereich des Steuerjochs 14 (Fig. 1) bzw. des Schalthebels 44 (Fig. 2, 3) in der Ansicht von unten dargestellt. Sie wird bezüglich der Ausführung gemäss Fig. 1 in der Folge erläutert.

Die Kabel 10 und 11 führen zum Handgriff 7. Ein Drehen des Griffes 7 nach links zieht das Kabel 10 gegen den Griff 7 und schwenkt das Steuerjoch 14 im Uhrzeigersinn (Fig. 4). Das Schaltblech 24 beginnt sich erst zu drehen, wenn die beiden am Steuerjoch 14 befestigten Zapfen 27, 28 sich in den Steuerschlitzen 25, 26 im Uhrzeigersinn bewegt haben. Mit dem Drehen des Schaltbleches 24 wird die Rückführfeder 17 gespannt.

Muss aus irgend einem Grund der Fahrer den Handgriff 7 loslassen, so dreht sich das Schaltblech 24 unter dem Zug der Feder 17 im Gegenuhrzeigersinn (Fig. 4), wobei es das Steuerjoch 14 mittels seiner Zapfen 27, 28 mitdreht, bis sich dieses in seiner Nullage (Fig.1) befindet: Der Mäher steht augenblicklich still.

Beim Schalten in eine Vorwärtsbewegung bleibt indessen das Schaltblech 24 infolge der Steuerschlitze 25, 26 in seiner Mittellage (Fig. 4) und die ungespannte Rückführfeder 17 tritt nicht in Funktion.

Es wäre natürlich grundsätzlich auch möglich, die "Schere 61, 62" auf einen anderen Schalthebel des Antriebes 43 direkt einwirken zu lassen, z.B. auf den Schalthebel 44, um diesen in die Nullage zu schieben.

Alle in der Beschreibung und/oder den Figuren dargestellten Einzelteile und Einzelmerkmale sowie deren Permutationen, Kombinationen und Variationen sind erfinderisch und zwar für n Einzelteile und Einzelmerkmale mit den Werten n = 1 bis n → ∞.

**Ansprüche**

1. Einachs-Geräteträger für Kommunal- und/oder Landwirtschaftseinsatz, vorzugsweise nach mindestens einem der Ansprüche, dadurch gekennzeichnet, dass einer der Handgriffe (7) drehbar und/oder verschiebbar angeordnet ist, um durch dessen Bewegen sowohl die Maschinenfortbewegungsgeschwindigkeit als auch die Bewegungsrichtung vorwärts/rückwärts festzulegen.

2. Einachs-Geräteträger, vorzugsweise nach mindestens einem der Ansprüche, dadurch gekennzeichnet, dass er ein Variatorgetriebe (13) aufweist, dessen Steuerung über zwei Kabel (10, 11) oder Gestänge von einem der Handgriffe aus erfolgt.

3. Einachs-Geräteträger, vorzugsweise nach mindestens einem der Ansprüche, dadurch gekennzeichnet, dass ein Element, z.B. eine Feder (17), angeordnet ist, um die Maschine (1) beim Loslassen des Dreh-oder Schalthandgriffes (7) bei Retourfahrt zum Stillstand zu bringen.

4. Einachs-Geräteträger, vorzugsweise nach mindestens einem der Ansprüche, dadurch gekennzeichnet, dass dessen Steuerung mechanisch, elektrisch oder hydraulisch von einem Handdrehgriff, bzw. einem Schaltorgan, beispielsweise einem Steuerventil, in unmittelbarer Nähe des Handgriffs aus erfolgt.

5. Einachs-Geräteträger, dessen Lenkrahmen (33) mittels zweier Handgriffe (34, 35) geführt ist, wobei unter Loslassung des einen Handgriffes (34) der Verstellmechanismus des Antriebes schaltbar ist und im Bereich eines der beiden Handgriffe (34, 35) eine einen Handhebel aufweisende Schnellstoppeinrichtung (51, 55, 56) angeordnet ist, welche mittels einer der beiden die zwei Handgriffe haltenden Hände betätigbar ist, wobei die Uebertragungselemente mindestens ein Zugkabel (52) mit Kabelführung (53) umfassen, um mittels dieser Uebertragungselemente (52, 55, 56, 38, 44, 45, 46) auf den Verstellmechanismus (44) des Antriebes (43) zu wirken, vorzugsweise nach mindestens einem der Ansprüche, dadurch gekennzeichnet, dass zwei mit dem Zugkabel (52) wirkverbundene, scherenartig angeordnete Schwenkhebel (55, 56) vorgesehen sind, um beim Betätigen des Zugkabels (52) einen Schalthebel (38, 44) für die Stellungen "Vorwärts-Null-Rückwärts" eines Hydrostatantriebes in seine Nullage zu bringen.

6. Einachs-Geräteträger, vorzugsweise nach mindestens einem der Ansprüche, dadurch gekennzeichnet, dass die beiden Schwenkachsenpunkte (57, 58) der Schwenkhebel und der Mittelpunkt des Schalthebels (38) ein gleichschenkliges, gegebenenfalls ein gleichseitiges Dreieck festlegen. (Fig. 2)

7. Einachs-Geräteträger, vorzugsweise nach mindestens einem der Ansprüche, dadurch gekennzeichnet, dass die Schwenkhebel (55, 56) doppelarmig ausgebildet sind, wobei die einen Arme (61, 61) zum Verschieben des Schalthebels (38) und die andern (52, 62) zur Aufnahme mindestens einer sie verbindenden Zugfeder (63) vorgesehen sind.

8. Einachs-Geräteträger, vorzugsweise nach mindestens einem der Ansprüche, dadurch gekennzeichnet, dass der eine Schwenkhebel (56) über ein weiteres Zugkabel (65) mit einem Steuerhebel (49) für das Zu-und Abschalten des Zapfwellenantriebes (48) versehen ist, welcher (56) beim Schwenken des Schalthebels (38) in seine Nullage den Zapfwellenantrieb (48) gleichzeitig abschaltet.

9. Einachs-Geräteträger, vorzugsweise nach mindestens einem der Ansprüche, dadurch gekennzeichnet, dass der Schalthebel (44 bzw. 38) direkt am Getriebe (43) oder im Bereich der Handgriffe (34, 35) angeordnet ist.

10. Einachs-Geräteträger, vorzugsweise nach mindestens einem der Ansprüche, dadurch gekennzeichnet, dass zusätzlich zur Zugfeder (63) an den anderen Armen (62, 62) eine, z.B. einstellbare Zugfeder (68) am dem einen der Arme (61, 61) angeordnet ist.

11. Einachs-Geräteträger, vorzugsweise nach mindestens einem der Ansprüche, dadurch gekennzeichnet, dass ein überbrückbarer, einstellbarer Anschlag (42) für die Fixierung der Nullage des Handschalthebels (38) vorgesehen ist.

12. Einachs-Geräteträger, vorzugsweise nach mindestens einem der Ansprüche, dadurch gekennzeichnet, dass zwischen dem einen Arm (61) und einem festen Maschinenteil (69) eine Zugfeder (68) angebracht ist, welche bewirkt, dass der Schalthebel (38), als Totmannschaltung wirkend, aus jeder Rückwärtsfahrt-Position in die Nullstellung gebracht wird.

FIG. 1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | CH-A- 607 699 (K. LÜÖND-SCHMIDIG) * Figuren 1,2; Seite 2, linke Spalte, Zeilen 28-34; Anspruch 2 * | 1 | B 62 D 51/06 B 62 D 51/00 |
| A | | 2 | |
| | --- | | |
| Y | DE-A-1 455 572 (LEWIS SHEPARD CO.) * Figuren 1,2; Seite 16, Absatz 2; Seite 17, Absatz 3 * | 1 | |
| A | | 3,4 | |
| | --- | | |
| A | FR-A-2 311 678 (S.P.A. GOLDONI) * Figuren 1,2,6-8; Seite 5, Zeile 10 - Seite 6, Zeile 3; Seite 6, Zeile 23 - Seite 7, Zeile 9 * | 5 | RECHERCHIERTE SACHGEBIETE (Int. Cl.4) |
| | ----- | | B 62 D B 60 K G 05 G A 01 B |

Der vorliegende Recherchenbericht wurde für alle Patentansprüche erstellt.

| Recherchenort | Abschlußdatum der Recherche | Prüfer |
|---|---|---|
| DEN HAAG | 07-07-1987 | CHLOSTA P. |